# EUROPEAN PATENT SPECIFICATION

(11) **EP 1 344 705 B1**
(45) Date of publication and mention of the grant of the patent: **10.06.2009**
(21) Application number: 03251578.5
(22) Date of filing: 14.03.2003
(51) Int. Cl.: B62B 5/06, B62B 3/14

(54) **Improved trolley handle**
Handgriff für Einkaufswagen
Poignée pour chariot

(30) Priority: 15.03.2002 GB 0206206
(43) Date of publication of application: 17.09.2003
(73) Proprietor: Sales Activation Solutions Group Limited, 123 Deansgate Manchester M3 2BU (GB)
(72) Inventor: Myers, Robert, Chislehurst, Kent BR7 6LT (GB)
(74) Representative: Lloyd, Patrick Alexander Desmond

(56) References cited:
- DE-A- 19 811 774
- DE-A- 19 830 297
- US-A- 5 549 409

## Description

The present invention relates to a handle for a trolley, particularly, but not exclusively, a handle for a shopping trolley or cart.

For many years, handles for trolleys have taken the form of a plastic coated metal tube which is fastened at each end to a respective side frame of the trolley by means of a resilient plastic fitting, known as an "end cap". This fitting is designed to receive and retain a tubular handle of a particular radius but can be used to fit handles of different lengths to accommodate trolleys of different widths.

In recent years, alternative shapes for handles have been proposed. For example, in WO-A-96/11130, in the name of the present applicant, a trolley handle unit is disclosed in which a panel is provided for displaying information, advertisements and the like, to the trolley user. The handle unit disclosed in this document is formed from moulded plastics and is fitted over a conventional tubular metal handle, in order to maintain strength and to fit in conventional end caps for attachment to the trolley.

DE 1981174 discloses a trolley handle comprising a central member and two end pieces each connectable to the central member at one end and to the trolley at the other. Each end piece is attached to the central member by insertion of a male portion of the end piece into a recess of the central portion. A groove on the male portion of the end piece prevents rotation of the central portion relative to the end pieces.

The present invention is concerned with improvements in a trolley handle, which has a panel for the display of information, such as advertisements, and in a fitting or "end cap" that attaches a handle to a trolley.

According to the present invention, there is provided a trolley handle comprising: a panel; and generally tubular handle members, extending to either side of the panel, the trolley handle being **characterized in that** the internal surfaces of the handle members include strengthening ribs along a substantial portion of the length thereof.

The internal ribs of the handle members provide improved strength so that the handle can be used without a conventional tubular metal handle.

The handle may be formed from moulded plastics and preferably comprises a display panel body having a hinged cover.

The present invention also provides a device for attaching the trolley handle as claimed in any one of claims 1 to 5 to a trolley comprising a collar having splines for engagement with the ribs on the internal surface of the handle member of the trolley handle and an outer cylindrical retaining member adapted to receive an end of the handle member.

The device is thus adapted to engage with the ribs of the handle of the first aspect of the present invention. In particular, the ribs of the handle resiliently engage with the splines and prevent rotation of the handle of the trolley, whilst permitting the handle to be mounted at a desired angle or orientation to the trolley.

Preferably the trolley handle comprises a display panel body having a hinged cover.

Preferably the cover has at lest one resiliently deformable projection adapted to be received in a corresponding recess in a first side of the panel body, for snap-fit engagement therewith, to secure the cover in a closed position on the panel. An aperture is conveniently provided in an opposite side of the panel to the recess; the aperture providing access to the at least one resiliently deformable projection to enable it to be released from engagement with the panel, to allow the cover to be opened.

The use of a hinged cover permits printed matter displaced on the panel to be readily replaced, whilst the release mechanism is vandal resistant.

Other preferred features and advantages of the present invention will be apparent from the following description and accompanying claims.

Embodiments of the present invention will now be described, with reference to the accompanying drawings, in which:
Figure 1 is a perspective view to the front and one side of a trolley handle, with the cover in a partially open position, in accordance with a preferred embodiment of the present invention;
Figure 2 is a perspective side view of a portion of the handle of Figure 1 with the cover detached;
Figure 3 is a perspective view of a device for fitting a handle to a trolley, and an end portion of a handle for cooperation with the device, in accordance with another preferred embodiment of the present invention; and
Figure 4A is a rear view of a part of the trolley handle of Figure 1, and Figure 4B is a cross section along the line A - A of Figure 4A.

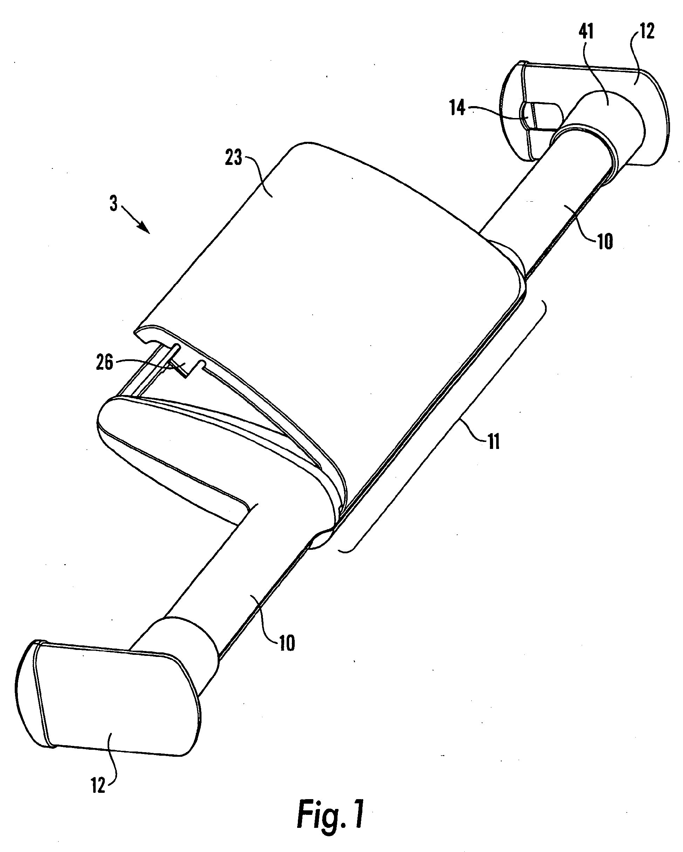

Figure 1 shows a handle unit 3 according to a preferred embodiment of the present invention. The handle unit 3 comprises a pair of handle members 10 separated by and integrated with a display panel 11. Fittings 12 known as "end caps" adapted to securely attach the handle unit 3 to a trolley (not shown) are connected to the ends of the handle members 10 furthest from the display panel 11.

The display panel 11 is adapted to receive a printed sheet (not shown) having printed information for display to the user of the trolley. The printed sheet may be in the form of paper, card or plastic sheet material and may be manually updated as the supermarket or other trolley provider requires. However, it is possible that the display panel may display information in other ways, for example on an electronic display or a revolving advertisement display as described in WO-A-96/11130 referred to above.

A hinged transparent cover 23 with a snap-fit catch 26 is provided to protect the printed sheet and to secure it to the display panel 11. The cover 23 allows the printed sheet, held in the display panel, to be simply and quickly substituted for another sheet bearing new or updated information as required. When the cover 23 is closed, it forms a seal with the front of the panel body sufficient to prevent the printed sheet carrying the displayed information from being damaged when the trolley is left exposed, for example to rain.

Although a substantially rectangular display panel 11 is shown, it will be obvious that other shapes such as circles or ovals may be used according to design tastes. Variations to the described means for securing the printed sheet or other display means will be apparent to one skilled in the art.

The handle members 10 are tubular and of substantially circular cross section although they may feature ergonomic contours in order to provide a comfortable area for gripping the handle when the trolley is being used.

The end caps 12 comprise an outer cylindrical collar 41 for receiving the handle members 10 and conventional fixings 14, well known in the art, for attachment to the wire frame of the trolley. Additional features of the end caps 14 are described below.

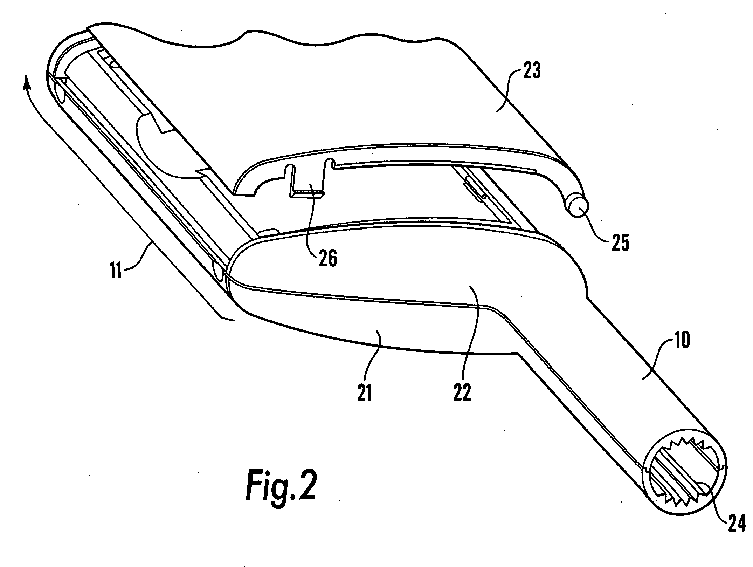

As shown more clearly in Figure 2, the handle unit 3 is constructed from two pieces of moulded plastic, a front section 22 and a rear section 21 that may be welded together to form an integral handle. It will be appreciated that in other embodiments, the handle unit 3 may be constructed from any number of parts according to design choice and this feature is not intended to limit the scope of the present invention. The sections 21 and 22 may be additionally held together by any suitable fixing means, for example, screws, snap-fit connectors or glue.

The handle unit 3 is preferably moulded from polypropylene, and may be coloured in accordance with the trolley provider's corporate identity. It will be appreciated that the handle unit may be moulded from other suitable synthetic materials such as epoxy resin, Bacolite and its modern equivalents and structured foam.

Importantly, each of the sections 21 and 22 are moulded with ribs 24 extending along the inner surface of the handle members 10 of the handle unit 3. These ribs 24 run along at least a substantial portion of the handle members 10. The ribs 24 provide additional strength to the handle members 10, thus avoiding the need to incorporate a conventional tubular metal rod in the handle unit 3. This reduces the cost and weight of the handle unit 3. In the preferred embodiment, each rib 24 has a generally triangular cross section but other profiles could also be used effectively.

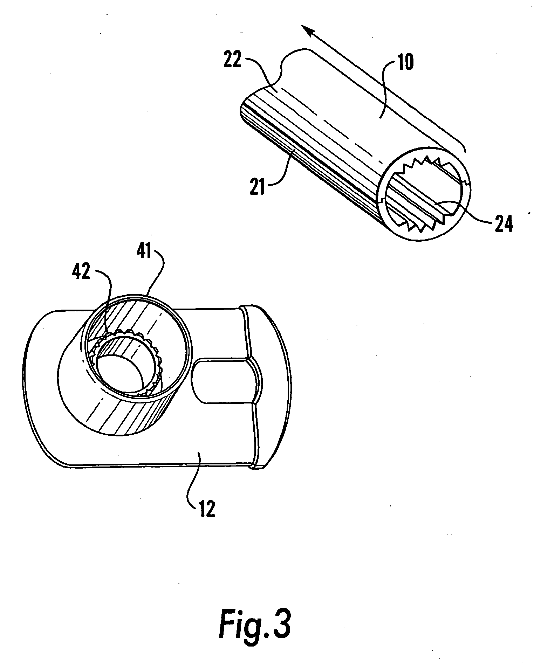

A further important aspect of the preferred embodiment of the present invention is shown in Figure 3. An end cap 12 comprises an outer cylindrical retaining member 41 adapted to receive an end of the handle member 10 of the handle unit 3. In addition, an inner cylindrical collar 42 with splines on its outer periphery is adapted to fit inside the end of the handle member 10 so that the ribs 24 securely engage with the splines on the cylindrical collar 42 so that the orientation of the handle unit 3 with respect to the end caps 12 is fixed. The cross sections of the ribs and splines must be such that when the handle member 10 is inserted into the end cap 12, the ribs and splines engage resiliently so as to prevent rotational movement between the handle unit 3 and the end cap 12. Withdrawing the handle element 10 from the end cap 12, rotating it and re-inserting it may determine a different orientation of the handle unit with respect to the end cap 12. As a result, the angle of the display element with respect to the trolley may be determined and adjusted in order to angle the display so as to be easily read by trolley users.

An advantage of the illustrated embodiment is that the handle members 10 can be cut to the length necessitated by the dimensions of the trolley to which the handle unit is to be attached. Since the ribs 24 have a uniform cross section and run along much of the length of the handle members 10, they will be present to engage with the ribs in the end cap 12 wherever the handle elements 10 are cut.

The ribs 24 provide both strengthening to the handle members 10 and a means to fix the orientation of the display element 11 relative to the trolley.

Whilst end caps, as illustrated in Figure 3, are designed for use with the trolley handle unit of the present invention, it will be appreciated that they may be used to fit to a trolley a simple tubular handle with corresponding ribs on the internal surface thereof.

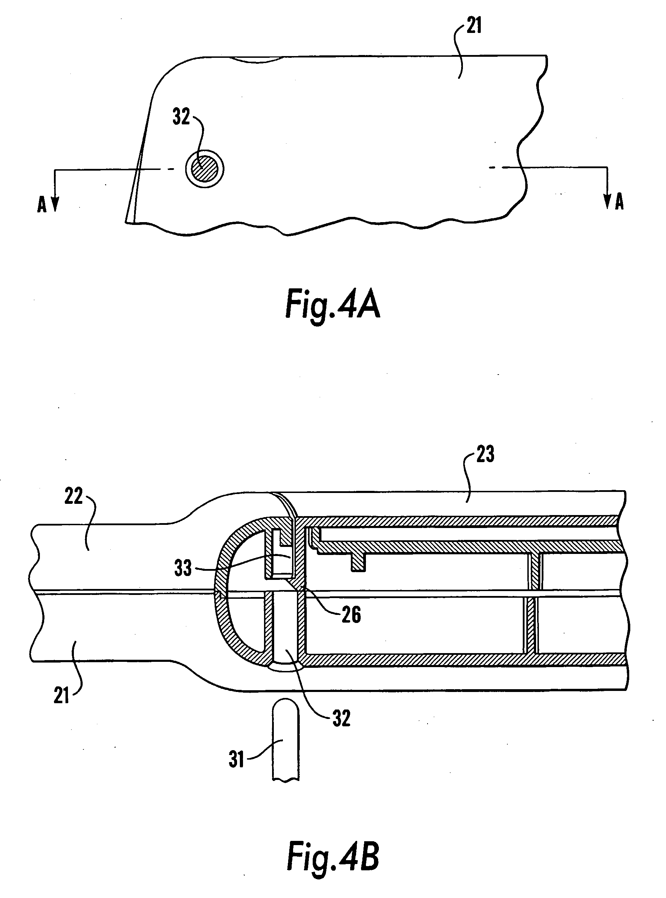

A further important aspect of the handle unit of the preferred embodiment of the present invention relates to the cover, as shown in Figures 4A and 4B. The cover 23 includes a pair of resiliently deformable snap-fit projections 26 extending from its internal face at each end thereof. Each projection 26 incorporates a fastener comprising a flange extending perpendicularly from a point near the end of the projection 26 with a bevelled surface extending from the edge of the flange to the end of the projection 26. The projections 26 are adapted to be received in corresponding recesses in the front section of the panel body. As the cover 23 is closed, each projection 26 is inserted into the corresponding recess and is resiliently deformed within the recess so as to slide over a locking member 33, adapted to cooperate with the projection 26, inside the front section 22 of the handle unit 3. When the cover 23 reaches the fully closed position, as shown in Figure 4B, the projection 26 springs back to its original shape and the flange hooks over the end of the locking member 33 so as to lock the cover 23 in the closed position.

A key device 31 proportioned so as to simultaneously fit into the pair of apertures 32 in the rear panel section 21 is adapted so that when inserted into the aperture 32, it pushes against the bevelled surface of each snap-fit projection 26. This deforms the projection so that the flange may move past the resilient member 33, allowing the cover 23 to be opened.

Thus, the opening mechanism requires the key device 31 in order to allow the cover 23 to be opened and is therefore largely vandal and tamper resistant. A person who does not possess an appropriate key device 31 cannot change the material displayed in the display panel 11 but the display can be easily updated by a person with the correct key device 31.

In the embodiment described, there is a snap-fit mechanism on both sides of the cover 23. However it will be appreciated by the skilled person that any number of such mechanisms may be used.

Although the preferred embodiment described has the transparent cover opening at the front of the display panel 11, it will be appreciated that other configurations are possible. For example, front section 22 may include a transparent window and a hinged cover may be provided in rear section 21 in order to allow access to the display area.

The skilled person will appreciate that various modifications may be made to the described embodiments, and it is intended that the invention should include all such modifications which fall within the scope of the accompanying claims.

## Claims

1. A trolley handle (3) comprising: a panel (11); and generally tubular handle members (10), extending to either side of the panel (11), the trolley handle (3) being **characterized in that** the internal surfaces of the handle members (10) include strengthening ribs (24) along a substantial portion of the length thereof.

2. A trolley handle as claimed in claim 1, **characterized in that** the panel comprises a display panel body with a hinged cover (23).

3. A trolley handle as claimed in claim 2, **characterized in that** the hinged cover (23) further comprises at least one resiliently deformable projection (26) adapted to be received in a corresponding recess in the body of the display panel (11) for snap fit engagement therewith so as to secure the cover (23) in a closed position.

4. A trolley handle as claimed in claim 3, **characterized in that** the at least one resiliently deformable projection (26) comprises a fastener comprising a flange extending perpendicularly from a point near the end of the projection (26) with a bevelled surface extending from the edge of the flange to substantially the end of the projection (26).

5. A trolley handle as claimed in claim 3 or claim 4, **characterized in that** at least one aperture (32) is provided in the body of the display panel (11) allowing a key device (31) to access the at least one resiliently deformable projection (26) so as to enable it to be released from engagement with the body of the display panel and allow the cover (23) to be opened.

6. A device (12) for attaching the trolley handle (3) as claimed in any one of claims 1 to 5 to a trolley, **characterized in that** it comprises a collar (42) having splines for engagement with the ribs (24) on the internal surface of a handle member (10) of the trolley handle (3) and an outer cylindrical retaining member (41) adapted to receive an end of the handle member (10).

## Patentansprüche

1. Einkaufswagengriff (3), umfassend: eine Konsole (11) und im Allgemeinen rohrförmige Griffelemente (10), die sich auf beiden Seiten der Konsole (11) erstrecken, **dadurch gekennzeichnet, dass** die Innenflächen der Griffelemente (10) entlang einem beträchtlichen Abschnitt ihrer Länge Versteifungsrippen (24) aufweisen.

2. Einkaufswagengriff nach Anspruch 1, **dadurch gekennzeichnet, dass** die Konsole einen Anzeigekonsolenkörper mit einer angelenkten Abdeckung (23) umfasst.

3. Einkaufswagengriff nach Anspruch 2, **dadurch gekennzeichnet, dass** die angelenkte Abdeckung (23) ferner wenigstens einen federnden verformbaren Vorsprung (26) zur Aufnahme in einer entsprechenden Ausnehmung im Körper der Anzeigekonsole (11) für den Einrasteingriff in ihr zwecks Sicherung der Abdeckung (23) in einer geschlossenen Stellung umfasst.

4. Einkaufswagengriff nach Anspruch 3, **dadurch gekennzeichnet, dass** der wenigstens eine federnde verformbare Vorsprung (26) ein Befestigungselement umfasst, das einen Flansch aufweist, der sich von einem Punkt nahe dem Ende des Vorsprungs (26) senkrecht erstreckt, wobei sich von dem Rand des Flansches bis im Wesentlichen zum Ende des Vorsprungs (26) eine abgeschrägte Oberfläche erstreckt.

5. Einkaufswagengriff nach Anspruch 3 oder 4, **dadurch gekennzeichnet, dass** in dem Körper der Anzeigekonsole (11) wenigstens eine Öffnung (32) bereitgestellt ist, die einer Schlüsselvorrichtung (31) den Zugang zu dem wenigstens einen federnden verformbaren Vorsprung (26) ermöglicht, damit er aus dem Eingriff mit dem Körper der Anzeigekonsole gelöst und die Abdeckung (23) geöffnet werden kann.

6. Vorrichtung (12) zum Anbringen des Einkaufswagengriffs (3) nach einem der Ansprüche 1 bis 5 an einem Einkaufswagen, **dadurch gekennzeichnet, dass** sie einen Ring (42) mit Keilennuten für den Eingriff mit den Rippen (24) an der Innenfläche eines Griffelements (10) des Einkaufswagengriffs (3) und ein äußeres zylindrisches Halteelement (41) zum Aufnehmen eines Endes des Griffelements (10) umfasst.

## Revendications

1. Poignée de chariot (3) comprenant : un panneau (11) ; et des éléments de poignée généralement tubulaires (10) qui s'étendent de chaque côté du panneau (11), la poignée de chariot (3) étant **caractérisée en ce que** les surfaces internes des éléments de poignée (10) comportent des nervures de renforcement (24) le long d'une partie substantielle de leur longueur.

2. Poignée de chariot selon la revendication 1, **caractérisée en ce que** le panneau comprend un corps de panneau d'affichage avec un couvercle articulé (23).

3. Poignée de chariot selon la revendication 2, **caractérisée en ce que** le couvercle articulé (23) comprend en outre au moins une protubérance déformable élastiquement (26) adaptée pour être reçue dans un évidement correspondant dans le corps du panneau d'affichage (11) en vue d'un engagement par encliquetage avec celui-ci de façon à fixer le couvercle (23) dans une position fermée.

4. Poignée de chariot selon la revendication 3, **caractérisée en ce que** l'au moins une protubérance déformable élastiquement (26) comprend une fixation comprenant une bride s'étendant perpendiculairement depuis un point près de l'extrémité de la protubérance (26) avec une surface biseautée s'étendant depuis le bord de la bride jusque sensiblement l'extrémité de la protubérance (26).

5. Poignée de chariot selon la revendication 3 ou la revendication 4, **caractérisée en ce qu'**au moins une ouverture (32) est aménagée dans le corps du panneau d'affichage (11) permettant à un dispositif de clé (31) d'accéder à l'au moins une protubérance déformable élastiquement (26) afin de lui permettre de se désengager du corps du panneau d'affichage et de permettre l'ouverture du couvercle (23).

6. Dispositif (12) de fixation de la poignée de chariot (3) selon l'une quelconque des revendications 1 à 5 à un chariot, **caractérisé en ce qu'**il comprend un collier (42) ayant des cannelures destinées à s'engager avec les nervures (24) sur la surface interne d'un élément de poignée (10) de la poignée de chariot (3) et un élément de retenue cylindrique externe (41) adapté pour recevoir une extrémité de l'élément de poignée (10).
